Europäisches Patentamt

European Patent Office

Office européen des brevets

(19)

(11) Numéro de publication: **0 241 343**
B1

(12) **FASCICULE DE BREVET EUROPEEN**

(45) Date de publication du fascicule du brevet:
02.11.89

(51) Int. Cl.⁴: **G01B 5/08**, G21C 17/00

(21) Numéro de dépôt: 87400642.2

(22) Date de dépôt: 23.03.87

(54) Dispositif de mesure à distance du diamètre extérieur d'un élément de forme cylindrique saillant par rapport à la surface d'une plaque.

(30) Priorité: 07.04.86 FR 8604935

(43) Date de publication de la demande:
14.10.87 Bulletin 87/42

(45) Mention de la délivrance du brevet:
02.11.89 Bulletin 89/44

(84) Etats contractants désignés:
BE DE ES

(56) Documents cités:
EP-A- 0 146 804
FR-A- 1 085 081
FR-A- 2 354 536
FR-A- 2 548 348

JOURNAL OF NUCLEAR MATERIALS,
vol. 65, no. 1, 1977, pages 307-312, North-Holland
Publishing Company, Amsterdam, NL; M. MASSON:
"In-pile creep measuring rigs for metallic specimens"

(73) Titulaire: FRAMATOME, Tour Fiat 1, Place de la Coupole,
F-92400 Courbevoie(FR)

(72) Inventeur: Blocquel, Alain, 13, Chemin des Tuileries,
F-65570 - Dardilly(FR)

(74) Mandataire: Moncheny, Michel et al, c/o Cabinet
Lavoix 2 Place d'Estienne d'Orves, F-75441 Paris
Cedex 09(FR)

## Description

L'invention concerne un dispositif de mesure à distance du diamètre extérieur d'un élément de forme cylindrique saillant par rapport à la surface d'une plaque percée d'au moins deux ouvertures au voisinage de l'élément cylindrique.

Dans les réacteurs nucléaires à eau sous pression, la plaque inférieure de coeur supportant les assemblages combustibles comporte, au niveau de chacun des assemblages, des ouvertures de passage d'eau la traversant sur toute son épaisseur et une douille de guidage d'instrumentation saillante par rapport à la face de la plaque inférieure de coeur sur laquelle viennent reposer les assemblages. Cette douille de guidage est placée de façon que son axe soit confondu avec l'axe du tube d'instrumentation de l'assemblage correspondant. Le tube guide d'instrumentation est placé à la partie centrale de l'assemblage et reçoit le doigt de gant à l'intérieur duquel on déplace un câble téléflex portant à son extrémité un capteur de flux neutronique, pour réaliser des mesures de flux, sur toute la hauteur de l'assemblage, pendant le fonctionnement du réacteur. De telles mesures peuvent être ainsi effectuées sur toute la hauteur du coeur, au niveau de chacun des assemblages.

La douille de guidage saillante par rapport à la plaque inférieure de coeur constitue l'extrémité d'un conduit de guidage dans lequel le doigt de gant peut être déplacé dans un sens ou dans l'autre pour l'introduire dans l'assemblage combustible ou au contraire pour l'extraire, par exemple au moment où l'on effectue le rechargement du coeur.

Chaque douille de guidage est placée, par rapport à l'assemblage correspondant, à l'intérieur de l'embout inférieur par lequel l'assemblage repose sur la plaque inférieure de coeur. La douille de guidage est entièrement libre à l'intérieur de l'embout inférieur de l'assemblage, l'alignement de son axe avec celui de l'assemblage étant assuré uniquement par le positionnement relatif de la douille et de l'assemblage sur la plaque inférieure de coeur. Dans les réacteurs nucléaires à eau sous pression actuellement en fonctionnement, les douilles de guidage des doigts de gant fixées sur la plaque inférieure de coeur ne présentent donc pas un diamètre extérieur parfaitement déterminé puisque cette dimension n'est pas critique pour assurer l'alignement du conduit de guidage avec le tube guide de l'assemblage.

Pour faciliter la mise en place des assemblages combustibles et pour permettre des dilatations différentielles, l'extrémité supérieure de la douille de guidage est placée à une distance relativement importante de l'entrée du tube guide de l'assemblage, à l'intérieur de l'embout inférieur. Le doigt de gant, lorsqu'il est introduit dans l'assemblage, est donc exposé dans l'espace libre existant entre la douille de guidage et l'embout, à des courants, transversaux d'eau de refroidissement qui peuvent le mettre en vibration.

Pour remédier à cet inconvénient, on a par exemple proposé de placer un ensemble de guidage complémentaire venant coiffer la douille de guidage et s'appuyant sur la partie de l'embout dans laquelle débouche le tube guide de l'assemblage.

L'adaptatation d'un tel dispositif de guidage et de protection complémentaire présente certaines difficultés qui sont liées au fait que les douilles de guidage dans les réacteurs nucléaires actuellement en fonctionnement n'ont pas un diamètre extérieur parfai tement défini et parfaitement constant. D'autre part, il est difficile d'effectuer des mesures précises sur des équipements fortement irradiés qui doivent être placés, lors des phases d'arrêt et d'entretien du réacteur sous une hauteur d'eau supérieure à dix mètres.

Enfin, le grand nombre de douilles de guidage disposées sur une plaque inférieure de coeur d'un réacteur nucléaire, ce nombre correspondant à celui des assemblages étant supérieur à cent, nécessite l'utilisation d'un procédé et d'un dispositif de mesure dont la mise en place et la mise en oeuvre peuvent être réalisées a distance de façon rapide et sûre.

On ne connaissait pas jusqu'ici un dispositif permettant d'effectuer de telles mesures de diamètre extérieur à distance, de façon répétitive.

On connaît cependant divers dispositifs utilisés pour des essais ou des contrôles dimensionnels sur des éléments de réacteur nucléaire qui comportent une perche de grande longueur qui peut être manipulée depuis un endroit situé au-dessus de la piscine du réacteur : cependant, de tels dispositifs n'ont jamais été conçus pour effectuer des mesures précises de diamètre.

Le but de l'invention est donc de proposer un dispositif de mesure à distance du diamètre extérieur d'un élément de forme cylindrique saillant par rapport à la surface d'une plaque percée d'au moins deux ouvertures au voisinage de l'élément cylindrique, comportant une perche de manutention de grande longueur et un ensemble de mesure relié à l'extrémité de la perche, un tel dispositif devant permettre d'effectuer rapidement et de façon très précise des mesures répétitives, en particulier sur des éléments tels que des douilles de guidage fixées sur la face supérieure de la plaque inférieure de coeur d'un réacteur nucléaire à eau sous pression.

Dans ce but, l'ensemble de mesure comporte :
- une structure de support constituée par une embase plane de forme annulaire munie d'au moins deux parties saillantes de guidage et de centrage destinées à coopérer avec les ouvertures de la plaque et un ensemble de poussée constitué par un bras monté articulé sur l'embase et comportant un moyen d'appui à son extrémité et par un doigt d'actionnement du bras monté de façon à être saillant par rapport à une face de l'embase destinée à venir en contact avec la plaque, de façon à actionner le bras de poussée lors de la mise en contact,
- et un équipage de mesure porté par la structure de support constitué par une platine montée sur l'embase annulaire de façon à pouvoir se déplacer dans toutes les directions du plan de l'embase et avec des amplitudes de déplacement limitées, par un fourreau tubulaire solidaire de la platine dont l'axe est perpendiculaire au plan de la platine et de l'embase et dont le diamètre intérieur est supérieur au diamètre à mesurer ainsi que par un palpeur associé à un moyen de mesure de déplacement, porté par le fourreau tubulaire et comportant une tige mobile dans une direction radiale du fourreau tubulaire dont l'extrémité vient en saillie dans l'alésage du fourreau tubulaire sous l'action d'un ressort,

- le bras de l'ensemble de poussée venant exercer une poussée de direction radiale sur la surface externe du fourreau tubulaire dans une zone opposée diamétralement au palpeur, lorsque le dispositif est placé en position active de mesure, le fourreau tubulaire entourant l'élément cylindrique à mesurer et l'embase plane annulaire de la structure de support venant reposer sur la plaque.

Afin de bien faire comprendre l'invention, on va maintenant décrire, à titre d'exemple non limitatif, en se référant aux figures jointes en annexe, un mode de réalisation du dispositif de mesure suivant l'invention utilisé pour la mesure du diamètre extérieur de douilles de guidage de l'instrumentation d'un réacteur nucléaire à eau sous pression.

La figure 1 est une vue en élévation du dispositif en position sur la plaque inférieure de coeur d'un réacteur nucléaire.

La figure 1a est une vue en coupe à plus grande échelle de la partie inférieure du dispositif.

La figure 2 est une vue en plan suivant AA de la figure 1a.

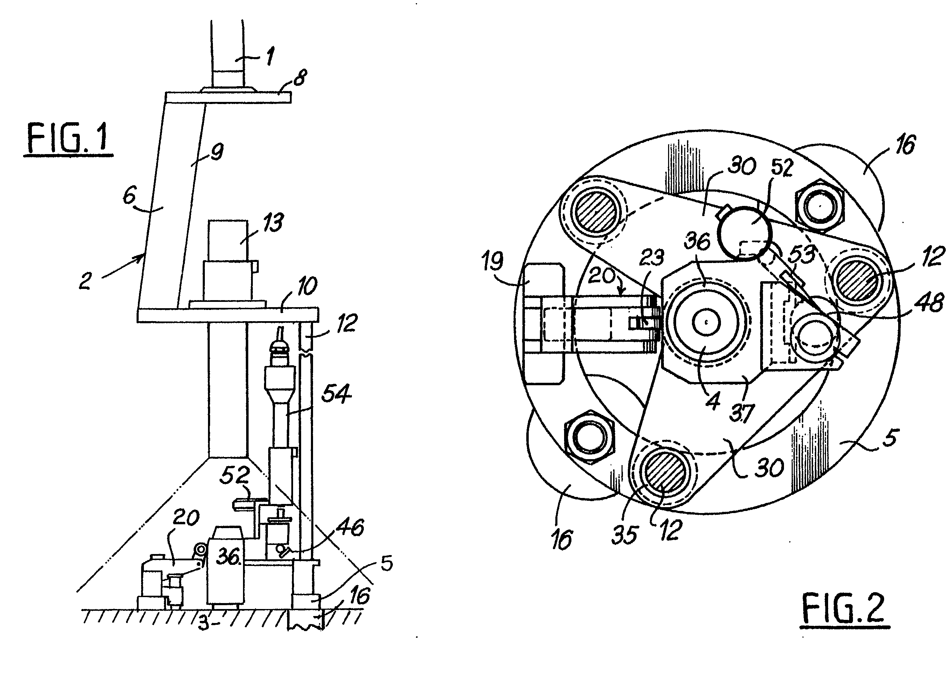

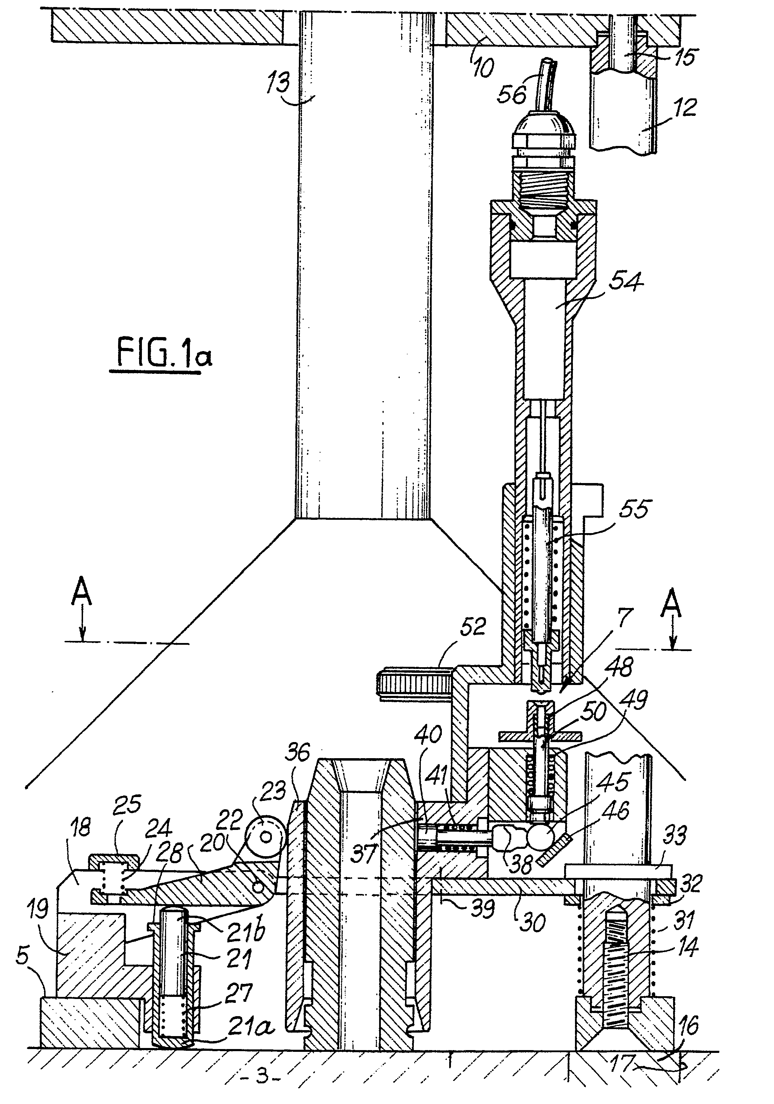

Sur les figures 1 et 1a, on voit la partie inférieure de la perche 1 de grande longueur permettant la mise en place d'un ensemble de mesure désigné de façon générale par le repère 2 sur la plaque inférieure de coeur 3 d'un réacteur nucléaire à eau sous pression, au niveau d'une douille de guidage 4 permettant le passage d'un doigt de gant vers un assemblage combustible.

Sur les figures, le dispositif a été représenté en position de service sur la plaque inférieure de coeur 3, le réacteur étant arrêté, les assemblages du coeur étant enlevées et la piscine et la cuve du réacteur étant remplies d'eau.

La perche de manutention 1 dont la partie supérieure non représentée se trouve au-dessus de la piscine du réacteur, d'une longueur supérieure à dix mètres, permet de descendre au niveau de la plaque inférieure de coeur et de déplacer l'ensemble de mesure 2, en utilisant par exemple la machine de chargement du réacteur pour effectuer la manutention.

L'ensemble de mesure 2 comporte une structure de support 5 reliée à la partie inférieure de la perche 1 par l'intermédiaire d'un dispositif de suspension 6 et un équipage de mesure 7 porté par la structure de support 5.

Le dispositif de suspension 6 comporte une plaque supérieure 8 de liaison à la perche 1, une plaque médiane 10 de liaison à la structure de support 5, trois bras de suspension 9 reliant les plaques 8 et 10 et trois colonnes 12 reliant la plaque intermédiaire 10 à l'embase plane annulaire 5 constituant la structure de support de l'ensemble de mesure.

De plus, la plaque intermédiaire 10 porte à sa partie centrale une caméra de télévision 13 permettant de visualiser la zone de mesure.

L'embase annulaire 5 est fixée par des vis 14 à l'extrémité inférieure des colonnes de suspension 12 elles-mêmes fixées à leur partie supérieure par des vis 15, à la plaque intermédiaire 10.

L'embase annulaire 5 est solidaire de deux plots de positionnement tels que 16 saillants vers le bas et d'une forme correspondant à la forme des ouvertures de passage d'eau 17 traversant la plaque inférieure de coeur 3.

L'embase annulaire 5 porte également un ensemble de poussée 18 constitué par un support 19, un bras de poussée 20 et un doigt d'actionnement 21.

Le bras de poussée 20 est monté articulé sur le support 19, autour d'un axe horizontal 22 et comporte à l'une de ses extrémités de forme coudée, un galet d'appui 23 monté rotatif autour d'un axe horizontal. L'autre extrémité du bras 20 est en appui par l'intermédiaire d'un ressort 24 sur une plaquette 25 fixée sur le support 19.

Le doigt 21 comporte une douille externe 21a et un poussoir 21b monté coulissant dans la douille 21a. Un ressort 27 est intercalé entre la douille 21a et le poussoir 21b. La douille 21a est engagée et montée coulissante dans une ouverture traversant le support 19 et comporte un rebord supérieur de retenue 28 qui permet à la douille 21a de venir reposer sur le support 19 lorsque l'ensemble de mesure 2 est soulevé par la perche 1, au-dessus de la plaque 3. Dans cette position de repos, le doigt 21 est alors saillant sous la surface inférieure de l'embase 5 destinée à venir en contact avec la surface supérieure de la plaque inférieure de coeur 3.

Sur la figure 1, le dispositif a été représenté en position de service sur la plaque inférieure de coeur 3 et dans cette position de service, le doigt 21 est en appui contre le bras de poussée 20, la mise en appui étant réalisée pendant la mise en place de l'ensemble de mesure 2 sur la plaque inférieure de coeur 3. Le doigt 21 permet de basculer le bras 20 autour de l'axe 22 de façon à déplacer son galet d'appui 23 vers la droite (sur la figure 1).

Comme il est visible sur les figures 1a et 2, l'équipage de mesure 7 comporte une platine 30 de forme plane montée sur l'embase 5 de façon à être parallèle à ses faces planes, par l'intermédiaire de ressorts 31 montés autour de la partie inférieure des colonnes 12 et intercalées entre la surface supérieure de l'embase 5 et une rondelle 32 en appui sous la face inférieure de la platine 30. La face supérieure de la platine 30 vient en appui sur un élément de butée 33 de la colonne 12. Au niveau de chacune des colonnes 12, la platine 30 comporte une ouverture circulaire 35 d'un diamètre sensiblement supérieur au diamètre de la colonne 12. De cette façon, la platine 30 peut se déplacer parallèlement au plan des faces de l'embase 5, dans toutes les directions, en translation ou en rotation, avec une amplitude déterminée par le jeu entre l'ouverture 35 de la platine et la colonne 12 correspondante.

De plus, la platine peut s'incliner autour d'axes horizontaux pour faciliter la mise en place de l'ensemble de mesure. La platine 30 comporte une ouverture en V visible sur la figure 2 communiquant avec une ouverture centrale circulaire dans laquelle est introduit un fourreau tubulaire 36 disposé avec son axe perpendiculaire à la platine 30.

Le fourreau 36 est solidaire d'un support 37 dans lequel est monté un palpeur de mesure à tige mobile 38 auquel est associé un moyen de mesure de déplacement qui sera décrit ultérieurement.

Le fourreau tubulaire 36 présente un diamètre intérieur très légèrement supérieur au diamètre extérieur maximal escompté pour les différentes douilles de guidage 4 sur lesquelles on effectue la mesure.

Le support 37 et donc le fourreau tubulaire 36 sont fixés rigidement sur la platine 30 par l'intermédiaire de vis 39.

Dans sa position représentée sur la figure 1, le bras de poussée 20 vient en appui par son galet 23 sur la surface extérieure du fourreau tubulaire 36, dans une zone sensiblement diamètralement opposée par rapport à la position du palpeur 38.

La tige mobile 40 du palpeur 38 est poussée vers l'intérieur du fourreau 36 par un ressort 41 de façon que l'extrémité de cette tige 40 soit légèrement saillante à l'intérieur de fourreau, dans sa position de repos.

Dans la position de service représentée sur la figure 1, le fourreau tubulaire 36 est enfilé sur la surface externe de la douille de guidage 4 sur laquelle on effectue la mesure de diamètre et l'extrémité de la tige 40 est en contact avec la surface externe de la douille 4.

La surface intérieure du fourreau tubulaire 36 est usinée pour constituer deux butées fixes légèrement saillantes disposées à 120° par rapport à la tige du palpeur 40, autour de l'axe du fourreau 36. De cette façon, lorsque le bras de poussée 20 vient en appui par son galet 23 sur la douille 36, l'ensemble de l'équipage de mesure mobile par rapport à l'embase 5 se déplace jusqu'au moment où les butées fixes viennent en contact avec la douille 4. A ce moment, la position de la tige 40 du palpeur 38 qui est en appui sur la douille de guidage 4 en un point opposé aux butées fixes, dépend uniquement du diamètre extérieur de la douille 4 ou de l'écart de ce diamètre par rapport à une ou plusieurs valeurs de référence.

La position de la tige 40 doit donc être déterminée avec précision et pour cela l'extrémité de cette tige opposée à l'extrémité en contact avec la douille 4 vient en appui sur une bille 45 elle-même en contact avec une surface inclinée 46 solidaire du support 37. Cet ensemble permet un renvoi a 90° et, avec un rapport 1, des déplacements de la tige 40 qui sont ainsi transmis à une tige verticale 50 montée dans le support 37 et rappelée par un ressort 49. La tige 50 est solidaire à sa partie supérieure d'un plateau d'actionnement 48 dont les déplacements ou la position représentatifs des déplacements ou de la position de la tige 40 du palpeur peuvent être mesurés de deux façons différentes.

Un comparateur de type basculant à cadran 52 comporte une tige 53 placée juste au-dessus du plateau 48 et un cadran situé dans le champ de vision de la caméra 13. On peut ainsi lire directement les déplacements ou la position de la tige 40.

Un capteur électronique de déplacement 54 est également disposé avec sa tige 55 verticale et dans le prolongement de la tige 50, au-dessus du plateau 48. Le capteur électronique 54 est relié par un câble 56 à un coffret de traitement électronique associé à un écran d'affichage permettant une lecture directe des valeurs numériques représentant la position du capteur.

On va maintenant décrire le fonctionnement du dispositif, dans le cas de la mesure du diamètre d'une douille de guidage fixée sur la plaque inférieure de coeur d'un réacteur nucléaire à eau sous pression, cette plaque étant sous une hauteur d'eau supérieure à 10 m dans la cuve du réacteur à l'arrêt.

Préalablement aux opérations de mesure proprement dites, on effectue un étalonnage, en utilisant une plaque d'étalonnage comportant quatre ouvertures identiques aux ouvertures de passage d'eau de la plaque inférieure de coeur et deux douilles de guidage perpendiculaires à la plaque ayant comme diamètre respectif, le diamètre minimal et le diamètre maximal des douilles de guidage de la plaque inférieure de coeur sur laquelle on effectue la mesure. Ces diamètres sont respectivement de 31,50 et 32,00 mm. La plaque d'étalonnage comporte de plus un trou taraudé à sa partie centrale permettant de la fixer par vissage à l'extrémité de la perche 1 pour la descendre dans le fond de la piscine du réacteur. On effectue en fond de piscine une mise en place du dispositif de mesure sur la douille au diamètre minimal et sur la douille au diamètre maximal de la plaque d'étalonnage. On relève les indications correspondantes grâce au coffret de traitement et d'affichage, ce qui permet un étalonnage direct en diamètre, dans les conditions exactes de service du dispositif de mesure.

Pour sa mise en service, l'outillage de mesure est descendu en fond de piscine grâce à la perche de manutention 1 dont l'extrémité supérieure est fixée à la machine de chargement du réacteur. Dans un premier temps, on amène l'outillage jusqu'à une position située à 100 mm au-dessus de la plaque inférieure de coeur 3.

L'opérateur recherche alors le meilleur centrage possible à l'aide de la caméra video 13, la partie supérieure de la douille de guidage 4 apparaissant au centre de l'alésage du fourreau 36.

On continue alors la descente du dispositif dont les plots saillants 16 de guidage et de centrage pénètrent dans les ouvertures 17 de passage d'eau correspondantes de la plaque inférieure de coeur 3. La structure de support du dispositif et en particulier son embase 5 est alors approximativement centrée par rapport à la douille 4.

Le fourreau 36 de l'équipage de mesure mobile du dispositif vient alors en correspondance avec la partie supérieure de la douille 4. Pour faciliter l'accostage, la partie inférieure de la surface interne du fourreau 36 est évasée vers le bas et coopère avec la partie supérieure de forme tronconique de la douille 4. Pendant l'accostage et la mise en place du fourreau 36 autour de la douille 4, l'équipage de mesure mobile peut s'incliner dans toutes les directions avec un petit angle de débattement et se déplacer dans toutes les directions du plan parallèle à la face plane d'appui de l'embase 5 qui vient en contact et se confond avec la face plane supérieure de la plaque inférieure de coeur 3.

Avant cette mise en contact, lorsque la surface de contact de l'embase 5 arrive, lors de la descente, à une distance de 5 mm de la plaque inférieure de coeur, le doigt 21 entre en contact par sa douille 21a avec la plaque inférieure de coeur 3. La descente du dispositif de mesure se poursuivant, le doigt 21 se déplace dans la direction verticale, vient en contact avec le bras 20 par son poussoir 21b et fait basculer le bras 20 de façon que son galet 23 se déplace vers la droite (sur la figure 1). Le galet d'appui 23 repousse le fourreau 36 et l'équipage de mesure mobile jusqu'au moment où les butées fixes à l'intérieur du fourreau 36 viennent en contact avec la surface externe de la douille de guidage 4. A ce moment, la position de la tige 40 du palpeur 38 est représentative du diamètre de la douille. Cette position est repérée grâce au capteur mécanique 52 et au capteur électronique 54, la valeur du diamètre en millimètre pouvant être affichée directement grâce au coffret de traitement et à son écran d'affichage.

Pour cela, le capteur électronique 54 est alimenté en courant de mesure par l'intermédiaire du coffret de traitement qui permet de conditionner les signaux alimentant le capteur 54, par l'intermédiaire d'un module oscillateur démodulateur. Les signaux transmis au retour par le capteur 54 qui est du type LVDT (transformateur différentiel à déplacement linéaire) sont reçus par le coffret de traitement qui convertit l'information électrique des signaux en une information, par exemple numérique, représentative du diamètre de la douille de guidage, ou de sa variation par rapport à une valeur de diamètre définie. Le coffret de traitement comporte également une sortie permettant de disposer en permanence d'un signal représentatif du diamètre ou de ses variations, sous forme analogique, qui peut être exploité par exemple sur un enregistreur graphique.

L'information sous forme numérique peut être utilisée non seulement pour l'affichage de la valeur du diamètre mais encore pour son traitement dans un calculateur.

Une valeur représentative du diamètre de la douille de guidage peut être lue directement par l'opérateur sur le cadran 52, grâce à la caméra video 13.

La disposition à 120° des butées fixes et de la tige 40 du palpeur 38 permet de réaliser une mise en place et une mesure dans des conditions très sûres.

On a ainsi pu obtenir, grâce au dispositif de mesure suivant l'invention, une précision supérieure à 0,01 mm et une fidélité meilleure que 0,001 mm, dans les conditions d'utilisation qui ont été décrites.

Pendant les mesures, pour éviter toute influence perturbatrice d'une contrainte, même faible, transmise au dispositif de mesure par l'intermédiaire de la perche de manutention 1, on continue à descendre la perche après que le dispositif de mesure repose sur la plaque inférieure de coeur 3. Ceci permet de libérer complètement le dispositif, la liaison entre la perche 1 et le dispositif de suspension 6 de l'outillage de mesure étant du type à maillon.

On voit d'après la description qui précède que le dispositif de mesure est parfaitement sûr, parfaitement fiable et d'une utilisation aisée. La mise en place de ces éléments sur la plaque inférieure de coeur et autour de la douille de guidage se fait de façon automatique, à partir du moment où un prépositionnement a été effectué grâce à la caméra vidéo associée au dispositif de mesure. Le diamètre des douilles de guidage ou la variation de ce diamètre peut être lu ou enregistré directement grâce à des moyens de traitement, d'affichage et d'enregistrement tout-à-fait classiques.

L'invention ne se limite pas au mode de réalisation qui vient d'être décrit.

C'est ainsi que la mise en contact du fourreau et de la douille, avant la mesure, peut se faire par un moyen différent d'un ensemble de deux butées fixes opposé à la tige du palpeur.

L'embase de la structure de support venant reposer sur la plaque inférieure de coeur peut être reliée à la perche de manutention par un dispositif différent du dispositif de suspension à tirant et colonnes qui a été décrit. De même, le montage de l'équipage de mesure mobile sur cette embase peut être réalisé d'une façon différente de celle qui a été décrite qui utilisait les colonnes de suspension et des ressorts d'appui permettant un montage souple. Les capteurs de déplacement peuvent être d'un type différent de ceux qui ont été décrits et on peut utiliser aussi bien un seul type de capteur que plusieurs capteurs en parallèle. On pourrait également imaginer un capteur permettant de mesurer directement les déplacements de la tige du palpeur de mesure, sans renvoi d'angle.

Enfin, le dispositif suivant l'invention peut être utilisé pour d'autres opérations que le contrôle des douilles de guidage de la plaque infé rieure de coeur d'un réacteur nucléaire à eau sous pression. Ce dispositif peut être utilisé toutes les fois où il est nécessaire de mesurer de façon très précise et à distance le diamètre d'un élément cylindrique saillant par rapport à une plaque fixe percée d'ouvertures au voisinage de l'élément cylindrique.

**Revendications**

1. Dispositif de mesure à distance du diamètre extérieur d'un élément (4) de forme cylindrique saillant par rapport à la surface d'une plaque (3) percée d'au moins deux ouvertures (17) au voisinage de l'élément cylindrique (4) comportant une perche de manutention (1) de grande longueur et un ensemble de mesure (2) relié à l'extrémité de la perche, l'ensemble de mesure comportant:
– une structure de support (5) constitué par une embase plane de forme annulaire munie d'au moins deux parties saillantes (16) de guidage et de centrage destinées à coopérer avec les ouvertures (17) de la plaque (3) et un ensemble de poussée (18) constitué par un bras (20) monté articulé sur l'embase (5) et comportant un moyen d'appui (23) à son extrémité et par un doigt d'actionnement (21) monté de façon à être saillant par rapport à une face de l'embase (5) destiné à venir en contact avec la plaque (3) de façon à actionner le bras de poussée (20) lors de la mise en contact,
– et un équipage de mesure porté par la structure de support constitué par une platine (30) montée sur l'embase annulaire (5) de façon à pouvoir se déplacer dans toutes les directions du plan de l'embase (5) et avec des amplitudes de déplacement limitées, par un fourreau tubulaire (36) solidaire de la platine (30) dont l'axe est perpendiculaire au plan de la platine (30) et de l'embase (5) et dont le diamètre intérieur est supérieur au diamètre à mesurer ainsi que par un palpeur (38) associé à un moyen de mesure de déplacement (52, 54) porté par le fourreau tubulaire (36) et comportant une tige mobile (40) dans une direction radiale du fourreau tubulaire (36) dont l'extrémité vient en saillie dans l'alésage du fourreau tubulaire (36) sous l'action d'un ressort (41), le bras (20) de l'ensemble de poussée venant exercer une poussée de direction radiale sur la surface externe du fourreau tubulaire (36), dans une zone opposée diamètralement au palpeur (38), lorsque le dispositif est placé en position active de mesure, le fourreau tubulaire (36) entourant l'élément cylindrique à mesurer et l'embase plane (5) de la structure de support venant reposer sur la plaque (3).

2. Dispositif de mesure suivant la revendication 1, caractérisé par le fait que la structure de support constituée par l'embase (5) est reliée à la perche de manutention (1) par l'intermédiaire d'un dispositif de suspension (6) comportant au moins une plaque de suspension (8, 10) et un ensemble de colonnes (12).

3. Dispositif de mesure suivant la revendication 2, caractérisé par le fait que les colonnes (12) sont fixées à leur partie inférieure à l'embase (5) et que la platine (30) de l'équipage de mesure mobile comportant des ouvertures d'un diamètre supérieur au diamètre des colonnes est intercalée, au niveau de chaque colonne (12) la traversant avec jeu par une ouverture, entre un ressort (31) en appui sur l'embase (5) et une butée (33) solidaire de la colonne (12).

4. Dispositif de mesure suivant la revendication 2, caractérisé par le fait que le dispositif de suspension (6) est relié à l'extrémité de la perche de manutention (1), par l'intermédiaire d'un liaison de type à maillon.

5. Dispositif de mesure suivant la revendication 1, caractérisé par le fait que le fourreau (36) comporte sur sa surface intérieure deux butées fixes disposées dans des positions angulaires à 120°, autour de l'axe du fourreau, par rapport à la tige mobile (40) du palpeur (38).

6. Dispositif de mesure suivant la revendication 1, caractérisé par le fait que la tige (40) du palpeur (38) est reliée au moyen de mesure de déplacement (52, 54) par l'intermédiaire d'un ensemble à renvoi d'angle (46, 50, 48).

7. Dispositif de mesure suivant la revendication 1, caractérisé par le fait que le moyen de mesure de déplacement de la tige (40) du palpeur (38) est constitué par un capteur mécanique à lecture directe (52) et par un capteur électronique (54) à sortie analogique ou numérique fournissant la mesure de déplacement en parallèle.

8. Dispositif de mesure suivant la revendication 2, caractérisé par le fait que le dispositif de suspension (6) porte une caméra vidéo (13) permettant de visualiser la zone de mesure, pour la mise en place du dispositif et/ou pour la lecture directe de la mesure, sur le moyen de mesure de déplacement (52).

9. Dispositif de mesure suivant la revendication 1, caractérisé par le fait que le moyen d'appui du bras de poussée (20) est constitué par un galet (23).

10. Application d'un dispositif de mesure suivant l'une quelconque des revendications 1 à 9 à la mesure du diamètre extérieur d'une douille de guidage fixée sur la plaque inférieure de coeur d'un réacteur nucléaire à eau sous pression, la mesure étant effectuée pendant un arrêt du réacteur nucléaire, la piscine et la cuve de ce réacteur étant remplies d'eau et les assemblages du coeur enlevés.

**Patentansprüche**

1. Vorrichtung zur Fernmessung des Außendurchmessers eines zylinderförmigen Elementes (4), das aus der Oberfläche einer von wenigstens zwei Öffnungen (17) in der Nähe des zylinderförmigen Elementes (4) durchbohrten Platte (3) vorspringt, mit einer Handhabungsstange (1) von großer Länge und einer mit einem Ende der Stange verbundenen Meßanordnung (2), wobei die Meßanordnung
– eine Trägerstruktur (5), die gebildet wird von einer ringförmigen, ebenen Fußplatte, die mit wenigstens zwei vorspringenden Führungs- und Zentrierungsteilen (16) versehen ist, die dazu bestimmt sind, mit den Öffnungen (17) der Platte (3) zusammenzuwirken, und von einer Antriebsanordnung (18), die von einem schwenkbar an der Fußplatte (5) befestigten Arm (20), der an seinem Ende eine Stützeinrichtung (23) aufweist, und von einem Betätigungsfinger (21) gebildet wird, welcher so angebracht ist, daß er aus einer Fläche der Fußplatte (5) vorspringt und dazu bestimmt ist, so mit der Platte (3) in Kontakt zu kommen, daß er den Antriebsarm (20) betätigt, wenn die Platte (3) mit ihm in Kontakt kommt, und
– ein von der Trägerstruktur getragenes Meßsystem, das gebildet wird von einer Platine (30), die an der ringförmigen Fußplatte (5) so befestigt ist, daß sie in der Ebene der Fußplatte (5) in allen Richtungen und mit begrenzter Verschiebungsweite verschoben werden kann, von einer einteilig mit der Platine (30) ausgebildeten röhrenförmigen Hülse (36), deren Achse senkrecht zur Ebene der Platine (30) und der Fußplatte (5) steht und deren Innendurchmesser größer ist als der zu messende Durchmesser, und von einem Sensor (38), der mit einer Verschiebungsmeßeinrichtung (52, 54) verbunden ist, von der röhrenförmigen Hülse (36) getragen wird und einen in radialer Richtung der röhrenförmigen Hülse (36) beweglichen Stift (40) enthält, dessen Ende durch die Wirkung einer Feder (41) in die Bohrung der röhrenförmigen Hülse (36) vorstößt, aufweist und wobei der Arm (20) der Antriebsanordnung an der äußeren Oberfläche der röhrenförmigen Hülse (36) in einem dem Sensor (38) diametral gegenüberliegenden Bereich in radialer Richtung einen Antrieb ausübt, wenn die Vorrichtung in die aktive Meßposition versetzt wird, in der die röhrenförmige Hülse (36) das zu messende zylinderförmige Element umgibt und in der die ebene Fußplatte (5) der Trägerstruktur auf der Platte (3) in die Ruhelage kommt.

2. Meßvorrichtung gemäß Anspruch 1, dadurch gekennzeichnet, daß die von der Fußplatte (5) gebildete Trägerstruktur mit der Handhabungsstange (1) über eine Aufhängevorrichtung (6) verbunden ist, die wenigstens eine Aufhängeplatte (8, 10) und eine Säulenanordnung (12) aufweist.

3. Meßvorrichtung gemäß Anspruch 2, dadurch gekennzeichnet, daß die Säulen (12) an ihrem unteren Teil mit der Fußplatte (5) verbunden sind und die Platine (30) des beweglichen Meßsystems, die Öffnungen mit einem Durchmesser, der größer ist als der Säulendurchmesser, aufweist, zwischen eine sich auf der Fußplatte (5) sich abstützende Feder (31) und ein einteilig mit der Säule (12) ausgebildetes Widerlager (33) auf der Höhe, auf der die jeweilige Säule (12) die Platine mit Spiel durch eine Öffnung durchquert, eingeschoben ist.

4. Meßvorrichtung gemäß Anspruch 2, dadurch gekennzeichnet, daß die Aufhängevorrichtung (6) mit dem Ende der Handhabungsstange (1) über eine kettengliedartige Verbindung verbunden ist.

5. Meßvorrichtung gemäß Anspruch 1, dadurch gekennzeichnet, daß die Hülse (36) an ihrer inneren Oberfläche zwei feste Widerlager aufweist, die in bezug auf den beweglichen Stift (40) des Sensors (38) in Winkelpositionen von 120° um die Hülsenachse angeordnet sind.

6. Meßvorrichtung gemäß Anspruch 1, dadurch gekennzeichnet, daß der Stift (40) des Sensors (38) mit der Verschiebungsmeßanordnung (52, 54) über eine Winkelvorgelegeanordnung (46, 50, 48) verbunden ist.

7. Meßvorrichtung gemäß Anspruch 1, dadurch gekennzeichnet, daß die Verschiebungsmeßeinrichtung des Stiftes (40) des Sensors (38) von einem mechanischen Meßfühler (52) zur direkten Ablesung und von einem elektronischen Meßfühler (54) mit analoger oder numerischer Ausgabe, die die Verschiebungsmessung parallel liefern, gebildet wird.

8. Meßvorrichtung gemäß Anspruch 2, dadurch gekennzeichnet, daß die Aufhängevorrichtung (6) eine Videokamera (13) trägt, die den Meßbereich sichtbar zu machen erlaubt, um die Vorrichtung in Stellung zu bringen und/oder um die direkte Ablesung des Meßergebnisses auf der Verschiebungsmeßeinrichtung (52) auszuführen.

9. Meßvorrichtung gemäß Anspruch 1, dadurch gekennzeichnet, daß die Einrichtung zum Stützen des Antriebsarmes (20) von einer Rolle (23) gebildet wird.

10. Anwendung einer Meßvorrichtung gemäß einem der Ansprüche 1 bis 9 auf die Messung des Außendurchmessers einer Führungshülse, die auf der unteren Platte des Kerns eines Druckwasser-Kernreaktors befestigt ist, wobei die Messung während eines Stillstands des Kernreaktors, in dem das Reaktorbecken und das Reaktordruckgefäß mit Wasser gefüllt und die Brennstoffkassetten herausgezogen sind, ausgeführt wird.

**Claims**

1. A device for the remote measurement of the external diameter of a cylindrical element (4) projecting from the surface of a plate (3) formed with at least two orifices (17) adjacent the cylindrical element (4), the device comprising a very long handling pole (1) and a measuring assembly (2) connected to the end of the pole, the measuring assembly comprising: a supporting structure (5) formed by a flat annular base having at least two projecting guiding and centring parts (16) adapted to cooperate with the orifices (17) in the plate (3), and a thrust assembly (18) formed by an arm (20) mounted hinged to the base (5) and having a bearing means (23) at its end, and an actuating finger (21) so mounted as to project in relation to a face of the base (5) adapted to contact the plate (3) to actuate the thrust arm (20) when such contact is made; and a measuring assembly borne by the supporting structure and formed by a stage (30) so mounted on the annular base (5) as to be movable in all the directions of the plane of the base (5) and with limited amplitudes of movement, by a tubular sleeve (36) which is integral with the stage (30) and whose axis is perpendicular to the plane of the stage (30) and of the base (5) and whose internal diameter is larger than the diameter to be measured, and also by a tracer (38) which is associated with a movement measuring means (52, 54) and is borne by the tubular sleeve (36) and comprises a rod (40) which is movable in a radial direction of the tubular sleeve (36) and whose end projects into the bore of the tubular sleeve (36) under the action of a spring (41). The arm (20) of the thrust assembly exerting a radially-directed thrust on the external surface of the tubular sleeve (36) in a zone diametrically opposite the tracer (38), when the device is placed in the active measuring position, the tubular sleeve (36) enclosing the cylindrical element to be measured and the plane base (5) of the supporting structure resting on the plate (3).

2. A measuring device according to claim 1, characterized in that the supporting structure formed by the base (5) is connected to the handling pole (1) via a suspension device (6) comprising at least one suspension plate (8, 10) and a set of columns (12).

3. A measuring device according to claim 2, characterized in that the columns (12) are in their lower part fastened to the base (5), and the stage (30) of the movable measuring assembly, comprising orifices of a diameter larger than the diameter of the columns, is interposed, in line with each column (12) passing through the stage with clearance via an orifice, between a spring (31) bearing against the base (5) and a stop (33) integral with the column (12).

4. A measuring device according to claim 2, characterized in that the suspension device (6) is connected to the end of the handling pole (1) via a shackle-type connection.

5. A measuring device according to claim 1, characterized in that the sleeve (36) has on its internal surface two fixed stops disposed in angular positions of 120° around the axis of the sleeve in relation to the movable rod (40) of the tracer (38).

6. A measuring device according to claim 1, characterized in that the rod (40) of the tracer (38) is connected to the movement measuring means (52, 54) via an angular transfer assembly (46, 50, 48).

7. A measuring device according to claim 1, characterized in that the means for measuring the movement of the rod (40) of the tracer (38) is formed by a mechanical sensor with a direct readoff (52) and by an electronic sensor (54) with an analog or digital output supplying the movement measurement in parallel.

8. A measuring device according to claim 2, characterized in that the suspension device (6) bears a video camera (13) enabling the measuring zone to be displayed, for the installation of the device and/or for the direct reading of the measurement on the movement measuring means (52).

9. A measuring device according to claim 1, characterized in that the bearing means for the thrust arm (20) is formed by a roller (23).

10. Application of a measuring device according to any of claims 1 to 9 to measuring the external diameter of a guide brush attached to the lower core plate of a pressurized water nuclear reactor, measurement being performed during reactor shutdown, and the pool and vessel of the reactor being filled with water and the core assemblies removed.

FIG.1

FIG.2

EP 0 241 343 B1

FIG.1a